# EUROPÄISCHE PATENTSCHRIFT

(11) **EP 3 385 931 B1**
(45) Veröffentlichungstag und Bekanntmachung des Hinweises auf die Patenterteilung: **27.07.2022**
(21) Anmeldenummer: 18164998.9
(22) Anmeldetag: 29.03.2018
(51) Int. Cl.: G08G 1/0955, B60Q 1/08

(54) **VERFAHREN ZUM BETREIBEN EINER BELEUCHTUNGSEINRICHTUNG FÜR EINES ODER MEHRERE KRAFTFAHRZEUGE UND KRAFTFAHRZEUG**
MOTOR VEHICLE AND METHOD FOR OPERATING A LIGHTING DEVICE OF ONE OR MORE MOTOR VEHICLES
PROCÉDÉ DE FONCTIONNEMENT D'UN DISPOSITIF D'ÉCLAIRAGE POUR UN OU PLUSIEURS VÉHICULES À MOTEUR ET VÉHICULE À MOTEUR

(30) Priorität: 03.04.2017 DE 102017205626
(43) Veröffentlichungstag der Anmeldung: 10.10.2018
(73) Patentinhaber: AUDI AG, 85045 Ingolstadt (DE)
(72) Erfinder: Poppinga, Benjamin, 85139 Wettstetten (DE)

(56) Entgegenhaltungen:
- WO-A1-2016/114048
- DE-A1-102006 050 546
- DE-A1-102006 050 548
- US-A1- 2015 228 195

## Beschreibung

Die Erfindung betrifft ein Verfahren zum Betreiben einer Beleuchtungseinrichtung für ein Kraftfahrzeug nach dem unabhängigen Anspruch 1. Ein zweiter Aspekt der Erfindung betrifft ein Kraftfahrzeug mit einer Beleuchtungseinrichtung nach dem unabhängigen Anspruch 5. Vorteilhafte Ausführungsformen sind in den abhängigen Ansprüchen angegeben.

Scheinwerfer eines Kraftfahrzeugs, insbesondere Frontscheinwerfer, sind dazu ausgebildet eine Fahrbahn in Fahrtrichtung vor dem Kraftfahrzeug auszuleuchten, damit diese für einen Fahrer des Kraftfahrzeugs besser wahrnehmbar wird. Moderne Scheinwerfer, beispielsweise Laserscheinwerfer oder LED-Scheinwerfer, für Kraftfahrzeuge ermöglichen eine zielgerichtete Abstrahlung von Licht beziehungsweise ein zielgerichtetes Vorgeben ihrer Abstrahlcharakteristik. Beispielsweise ermöglicht eine dynamische Kurvenlicht-Funktion die Ausleuchtung von Kurven durch Einstellen der Abstrahlung des Scheinwerfers.

Die DE 10 2014 207 399 A1 stellt ein System zur Bewältigung von Unfallrisikosituationen mit Tieren bereit. Das System umfasst eine Steuereinrichtung, die zum Abblenden zumindest eines Scheinwerfers, so dass das Lebewesen nicht mehr im Radius des zumindest einen Scheinwerfers ist. Beispielsweise weist der Scheinwerfer bewegliche Linsen auf oder ist als Segmentscheinwerfer, eingerichtet zum selektiven ausblenden des Lebewesens, ausgeführt. Zur Vermeidung der Blendung eines Fahrers eines Kraftfahrzeugs durch einen Scheinwerfer eines entgegenkommenden Kraftfahrzeugs offenbart die DE 10 2013 007 688 A1 eine Vorrichtung zum Ansteuern eines Scheinwerfers. Der Scheinwerfer des Kraftfahrzeugs und der Scheinwerfer des entgegenkommenden Kraftfahrzeugs werden periodisch hell oder dunkel geschaltet. Eine Photodiode des Kraftfahrzeugs erfasst den Lichtkegel des Scheinwerfers des entgegenkommenden Kraftfahrzeugs. Das periodische hell oder dunkel Schalten des Scheinwerfers erfolgt in Abhängigkeit eines Signals der Photodiode.

Moderne Scheinwerfer können jedoch auch komplexere Abstrahlcharakteristiken beispielsweise zur Projektion von Symbolen auf eine Fläche, insbesondere die Fahrbahn, ermöglichen. Beispielsweise offenbart die DE 10 2010 034 853 A1 ein Kraftfahrzeug mit einem Scheinwerfer, der als Digitalprojektor zum Projizieren einer grafischen oder schriftlichen Information auf die Fahrbahn ausgebildet ist.

Aus der WO 2016/114 048 A1 beziehungsweise der US 2018/ 00 04 020 A1 ist es bekannt, Informationen auf eine Fahrbahnoberfläche zu projizieren. Ein entsprechender Bildprojektionsapparat weist eine Erfassungseinheit auf, welche die Information über das Kraftfahrzeug erfasst, und eine Projektionseinheit, welche das Bild basierend auf der Information projiziert.

Die US 2015/02 28 195 A1 offenbart das Synchronisieren der Projektion eines Symbols betreffend eine Überquerung einer Straße durch einen Fußgänger mittels einer Koordinationsplattform. Außerdem ist eine Kommunikation von Kraftfahrzeugen untereinander offenbart, um einen Konsens zu erzielen, ob dem Fußgänger eine Überquerung der Straße ermöglicht werden soll.

Die Offenlegungsschrift DE 10 2006 050 548 A1 beschreibt ein Verfahren zur Warnung anderer Verkehrsteilnehmer. Mit einem an einem Kraftfahrzeug vorgesehenen Projektionsmittel wird ein Projektionsobjekt als Warnhinweis für einen anderen Verkehrsteilnehmer außerhalb des Kraftfahrzeugs erzeugt.

Die Offenlegungsschrift DE 10 2006 050 546 A1 beschreibt ein Verfahren zur Informationsdarstellung. Bei diesem Verfahren wird zumindest ein Projektionsobjekt an einer Projektionsstelle außerhalb eines Kraftfahrzeugs durch ein Projektionsmittel erzeugt. Ein zumindest voraussichtlicher zukünftiger Aufenthaltsort des Kraftfahrzeugs wird flächig markiert.

Es ist Aufgabe der vorliegenden Erfindung, eine bessere Erkennbarkeit für ein durch einen Scheinwerfer eines Kraftfahrzeugs auf eine Fläche projiziertes Symbol zu ermöglichen.

Die Erfindung basiert auf der Erkenntnis, dass sich Lichtkegel von Scheinwerfern mehrerer Kraftfahrzeuge überlappen können und somit das durch den Scheinwerfer eines oder mehrerer der Kraftfahrzeuge auf die Fläche projizierte Symbol aufgrund der Überlappung unkenntlich wird. Die Erfindung löst die genannte Aufgabe dadurch, dass ein Kraftfahrzeug eine Beleuchtungskarte aus einer Steuerinstanz empfängt, wobei die Projektion des Symbols auf die Fläche durch die Beleuchtungskarte vorgegeben wird. Wird das erfindungsgemäße Verfahren durch mehrere Kraftfahrzeuge durchgeführt, so kann die bessere Erkennbarkeit des Symbols beispielsweise dadurch ermöglicht werden, anhand der Beleuchtungskarte das Symbol durch die mehreren Kraftfahrzeuge kongruent auf die Fläche projiziert wird.

Erfindungsgemäß wird bei dem vorliegenden Verfahren in einem ersten Schritt eine vorgegebene Beleuchtungskarte aus einer Steuerinstanz empfangen, wobei durch die Beleuchtungskarte die Projektion des Symbols auf die Fläche vorgegeben wird. Das Symbol beinhaltet insbesondere eine grafische oder schriftbildliche Information. Das Symbol kann für einen Betrachter einen Informationsgehalt aufweisen beziehungsweise eine Information, Geste oder Aufforderung visualisieren. Insbesondere wird die Beleuchtungskarte während eines bestimmungsgemäßen Normalbetriebs des Kraftfahrzeugs, beispielsweise während einer Fahrt und/oder während ein Motor des Kraftfahrzeugs eingeschaltet ist, aus der Steuerinstanz empfangen. Insbesondere befindet sich das Kraftfahrzeug genau dann in dem bestimmungsgemäßen Normalbetrieb, während dieses fährt und/oder während dessen Scheinwerfer Licht abstrahlt und/oder während ein Motor des jeweiligen Kraftfahrzeugs läuft. Vorzugsweise wird die Beleuchtungskarte während des bestimmungsgemäßen Normalbetriebs des Kraftfahrzeugs wiederholt, beispielsweise regelmäßig oder periodisch, empfangen.

Die Beleuchtungskarte gibt das Symbol und eine Position in einem auf das Kraftfahrzeug bezogenen Koordinatensystem vor. Optional kann dieses Vorgeben in einem ortsfesten Koordinatensystem erfolgen. Alternativ oder zusätzlich kann die Beleuchtungskarte mehreren Punkten oder Koordinaten in dem ortsfesten Koordinatensystem zuordnen. Durch die Beleuchtungskarte wird mehreren Punkten oder Koordinaten in dem auf das Kraftfahrzeug bezogenen Koordinatensystem ein Helligkeitswert zugeordnet. Gibt die Beleuchtungskarte das Symbol anhand des auf das Kraftfahrzeug bezogenen Koordinatensystem vor, so ist es vorteilhaft, wenn sich das Kraftfahrzeug lokalisiert und eine Position an die Steuerinstanz übermittelt. Es ist vorgesehen, dass nur solche Bereiche des Symbols beziehungsweise der Beleuchtungskarte durch den Scheinwerfer auf die Fläche projiziert werden, welche in einem vorgegebenen Leuchtbereich des Scheinwerfers liegen. Der vorgegebene Leuchtbereich ist so gewählt, dass eine Blendung anderer Verkehrsteilnehmer reduziert wird.

Anhand der Beleuchtungskarte wird eine Abstrahlcharakteristik für den Scheinwerfer derart ermittelt, dass das Symbol wie durch die Beleuchtungskarte vorgegeben auf die Fläche projiziert wird. Hierfür kann es vorgesehen sein, dass sich das Kraftfahrzeug lokalisiert. Insbesondere wird berechnet, welche Abstrahlcharakteristik des Scheinwerfers zu der vorgegebenen Projektion des Symbols auf die Fläche führt. Beispielsweise wird berechnet, für welche Abstrahlcharakteristik des Scheinwerfers die durch die Beleuchtungskarte vorgegebenen Koordinaten mit dem durch das Koordinatensystem vorgegebenen Helligkeitswert ausgeleuchtet werden. Hierzu kann die Fläche durch einen Sensor des Kraftfahrzeugs, beispielsweise einen Radarsensor oder einen Lidar-Sensor, vermessen werden. Alternativ kann eine oder mehrere Standardflächen mit vorgegebener Ausdehnung, Relativposition oder Form in dem Kraftfahrzeug hinterlegt sein und zum Ermitteln beziehungsweise Berechnen der Abstrahlcharakteristik genutzt werden. Vorzugsweise wird berechnet, welche Abstrahlcharakteristik des Scheinwerfers zu der vorgegebenen Projektion des Symbols auf der Standardfläche führen würde. Diese in Abhängigkeit von der Standardfläche berechnete Abstrahlcharakteristik des Scheinwerfers kann anschließend als die Abstrahlcharakteristik für den Scheinwerfer festgelegt beziehungsweise ermittelt werden. In einem nächsten Schritt wird die ermittelte Abstrahlcharakteristik für den Scheinwerfer eingestellt.

Die Erfindung sieht vor, dass das Kraftfahrzeug Teil eines Verbundes mehrerer Kraftfahrzeuge ist und die Beleuchtungskarte aus dem Verbund mehrerer Kraftfahrzeuge als Steuerinstanz empfangen wird. Beispielsweise wird die Beleuchtungskarte aus einem weiteren der mehreren Kraftfahrzeuge als Steuerinstanz empfangen. Die Steuerinstanz kann durch mehrere oder alle Kraftfahrzeuge aus dem Verbund mehrerer Kraftfahrzeuge gebildet sein. Im diesem Fall kann auch das Kraftfahrzeug Teil der Steuerinstanz sein. Insbesondere tauscht das Kraftfahrzeug mit einem oder mehreren Kraftfahrzeugen aus dem Verbund der mehreren Kraftfahrzeuge Daten zum Erstellen der Beleuchtungskarte aus. Dies erfolgt insbesondere kabellos beispielsweise über WiFi, Bluetooth oder LTE-V.

Die Erfindung sieht vor, dass durch die Beleuchtungskarte die Abstrahlcharakteristik der Scheinwerfer der Kraftfahrzeuge aus der Mehrzahl an Kraftfahrzeugen untereinander zum projizieren des Symbols synchronisiert wird. Insbesondere wird durch die Beleuchtungskarte die Projektion des Symbols für jedes Kraftfahrzeug aus der Mehrzahl an Kraftfahrzeugen vorgegeben. Somit kann durch die Beleuchtungskarte für jedes Kraftfahrzeug vorgegeben werden, das Symbol auf eine bestimmte Art und Weise auf die Fläche zu projizieren. Die Beleuchtungskarte kann für jedes Kraftfahrzeug aus der Mehrzahl an Kraftfahrzeugen gleich oder unterschiedlich sein. Ist die Beleuchtungskarte für jedes Kraftfahrzeug unterschiedlich, so kann sich die Projektion des Symbols durch mehrere der Kraftfahrzeuge ergänzen. Beispielsweise wird mehreren der Kraftfahrzeuge vorgegeben jeweils ein Teilsymbol auf die Fläche zu projizieren, wobei sich die Teilsymbole zu dem Symbol zusammensetzen.

Eine nicht beanspruchte Ausführungsform sieht vor, dass die Beleuchtungskarte aus einer zentralen Servereinrichtung als Steuerinstanz empfangen wird. Beispielsweise kommuniziert das Kraftfahrzeug kabellos, vorzugsweise über das Mobilfunknetz, beispielsweise mittels LTE, GSM oder UMTS, der zentralen Servereinrichtung. Das Kraftfahrzeug kann alternativ oder zusätzlich die Beleuchtungskarte, eine gewünschte Beleuchtungskarte oder eine gewünschte Projektion für das Symbol an die Servereinrichtung übermitteln. Die gewünschte Projektion ist beispielsweise eine Projektion, die durch das Kraftfahrzeug oder einen Fahrer des Kraftfahrzeugs gewünscht wird. Die gewünschte Beleuchtungskarte kann die gewünschte Projektion beschreiben. Auf diese Weise kann die gewünschte Beleuchtungskarte auch dann durch das Kraftfahrzeug beeinflusst werden, wenn die Steuerinstanz als zentrale Servereinrichtung ausgeführt ist.

Eine Weiterbildung sieht vor, dass das Symbol auf einen Untergrund, auf dem das Kraftfahrzeug steht, insbesondere eine Fahrbahn, als die Fläche projiziert wird. Beispielsweise wird als das Symbol ein Zebrastreifen auf die Fahrbahn projiziert. Bei der Fahrbahn handelt es sich um eine Fläche welche für das Kraftfahrzeug besonders häufig für die Projektion zur Verfügung steht. Die Fahrbahn kann durch die Standardfläche besonders leicht angenähert werden, da diese häufig einen ähnlichen Verlauf relativ zu dem Kraftfahrzeug besitzt. Insbesondere wird ein Verlauf der Fahrbahn durch eine Ebene als Standardfläche angenähert, welche durch alle Standflächen, insbesondere an Rädern des Kraftfahrzeugs, festgelegt ist.

Eine Weiterbildung sieht vor, dass der Scheinwerfer ein Matrixleuchtmittel, eine Anordnung von Mikrospiegeln, eine Anordnung von Flüssigkristallen oder einen Laserscanner umfasst, welches/welche/welcher zum Einstellen der Abstrahlcharakteristik des Scheinwerfers entsprechend angesteuert wird. Durch den Scheinwerfer der genannten Art beziehungsweise durch entsprechendes ansteuern des Scheinwerfers der genannten Art kann das Symbol besonders vorteilhaft auf die Fläche projiziert werden. Insbesondere ist eine besonders hohe Bildauflösung für das Symbol ermöglicht.

Eine Weiterbildung sieht vor, dass beim Einstellen der Abstrahlcharakteristik für den Scheinwerfer einzelne Leuchtpunkte des Scheinwerfers so eingeschaltet oder ausgeschaltet werden und/oder eine Abstrahlrichtung der einzelnen Leuchtpunkte des Scheinwerfers so vorgegeben wird, dass die Abstrahlcharakteristik des Scheinwerfers der ermittelten Abstrahlcharakteristik entspricht. Mit anderen Worten erfolgt das Einstellen der Abstrahlcharakteristik für den Scheinwerfer durch ansteuern der einzelnen Leuchtpunkte des Scheinwerfers. Somit ist eine besonders hohe Bildauflösung für das Symbol ermöglicht. Nicht beansprucht ist ein Verfahren zum Betreiben einer Mehrzahl an Kraftfahrzeugen, durch welche jeweils mittels eines Scheinwerfers ein Symbol auf eine Fläche projiziert wird. Dabei wird die Beleuchtungskarte an jedes Kraftfahrzeug aus der Mehrzahl an Kraftfahrzeugen übermittelt, während sich dieses in einem bestimmungsgemäßen Normalbetrieb befindet. Die Beleuchtungskarte kann der Beleuchtungskarte, wie sie bereits im Rahmen des Verfahrens zum Betreiben der Beleuchtungseinrichtung beschrieben wurde, entsprechen. Insbesondere befindet sich ein Kraftfahrzeug aus der Mehrzahl an Kraftfahrzeugen genau dann in dem bestimmungsgemäßen Normalbetrieb, während dieses fährt und/oder während dessen Scheinwerfer Licht abstrahlt und/oder während ein Motor des jeweiligen Kraftfahrzeugs läuft. Vorzugsweise wird die Beleuchtungskarte während des bestimmungsgemäßen Normalbetriebs des jeweiligen Kraftfahrzeugs wiederholt, beispielsweise regelmäßig oder periodisch, an das jeweilige Kraftfahrzeug übermittelt. Durch die Beleuchtungskarte wird die Projektion des Symbols auf die Fläche vorgegeben.

Ein zweiter Aspekt der Erfindung betrifft ein Kraftfahrzeug mit einer Beleuchtungseinrichtung mit einem Scheinwerfer, welcher dazu ausgebildet ist, ein Symbol auf eine Fläche zu projizieren. Das Kraftfahrzeug beziehungsweise die Beleuchtungseinrichtung weist eine Empfangseinheit, eine Auswerteeinheit und eine Stelleinheit auf. Die Empfangseinheit ist zum Empfangen einer vorgegebenen Beleuchtungskarte aus einer Steuerinstanz in einem Betrieb des Kraftfahrzeugs ausgebildet, wobei durch die Beleuchtungskarte die Projektion des Symbols auf die Fläche vorgegeben ist. Zudem ist eine Position in einem auf das Kraftfahrzeug bezogenen Koordinatensystem vorgegeben. Mehrere Punkte oder Koordinaten der Beleuchtungskarte wird in dem auf das Kraftfahrzeug bezogenen Koordinatensystem ein Helligkeitswert zugeordnet. Die Auswerteeinheit ist dazu ausgebildet, eine Abstrahlcharakteristik für den Scheinwerfer derart zu ermitteln, dass die Projektion des Symbols auf die Fläche wie durch die Beleuchtungskarte vorgegeben erfolgt. Die Auswerteeinheit ist ausgebildet ist, nur solche Bereiche des Symbols durch den Scheinwerfer auf die Fläche zu ermitteln, welche in einem vorgegebenen Leuchtbereich des Scheinwerfers liegen. Der vorgegebene Leuchtbereich wird so gewählt, dass eine Blendung anderer Verkehrsteilnehmer reduziert wird. Die Stelleinheit ist eingerichtet, die ermittelte Abstrahlcharakteristik für den Scheinwerfer einzustellen. Insbesondere ist das Kraftfahrzeug beziehungsweise die Beleuchtungseinrichtung eingerichtet ein erfindungsgemäßes Verfahren durchzuführen.

Das Kraftfahrzeug ist ausgebildet ist, als Teil eines Verbundes mehrerer Kraftfahrzeuge die Beleuchtungskarte aus dem Verbund mehrerer Kraftfahrzeuge als Steuerinstanz zu empfangen, wobei mittels der Beleuchtungskarte eine weitere Abstrahlcharakteristik eines Scheinwerfers eines weiteren Kraftfahrzeugs der mehreren Kraftfahrzeuge mit der ermittelten Abstrahlcharakteristik synchronisiert wird. Das Kraftfahrzeug ist ferner ausgebildet ist, mit einem oder mehreren Kraftfahrzeugen aus dem Verbund der mehreren Kraftfahr-zeuge Daten zum Erstellen der Beleuchtungskarte (5) auszutauschen.

Eine Weiterbildung sieht vor, dass der Scheinwerfer ein Matrixleuchtmittel, eine Anordnung von Mikrospiegeln, eine Anordnung von Flüssigkristallen oder einen Laserscanner aufweist. Ein derartiger Scheinwerfer kann, beispielsweise aufgrund eines hohen Kontrast und einer hohen Auflösung der Vielzahl von Leuchtpunkten, eine besonders vorteilhafte Projektion des Symbols auf die Fläche ermöglichen. Beispielsweise ist der Scheinwerfer als LED-Scheinwerfer oder als Laser-Scheinwerfer ausgeführt.

Zu der Erfindung gehören auch Weiterbildungen des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Kraftfahrzeugs hier nicht noch einmal beschrieben.

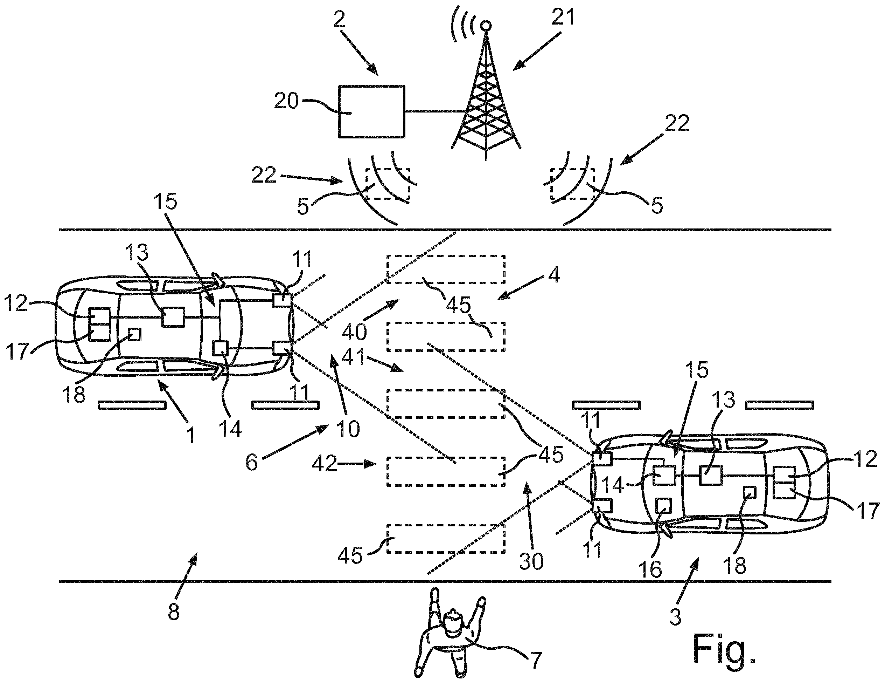

Im Folgenden sind Ausführungsbeispiele der Erfindung beschrieben. Hierzu zeigt die einzige Fig. eine Servereinheit.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Auf einer Straße 8 befinden sich zwei Kraftfahrzeuge 1, 3. Jedes der Kraftfahrzeuge 1, 3 weist eine Beleuchtungseinrichtung 15 mit zwei Scheinwerfern 11 auf. Jeder der Scheinwerfer 11 besitzt einen jeweiligen Leuchtbereich 10, 30, welcher durch den jeweiligen Scheinwerfer 11 ausgeleuchtet wird. Der vorgegebenen Leuchtbereich 10, 30 ist so gewählt, dass durch die Scheinwerfer 11 der Kraftfahrzeuge 1, 3 ein Fahrer des jeweils anderen Kraftfahrzeugs 1, 3 nicht geblendet wird. Aus Gründen der Übersichtlichkeit ist der vorgegebene Leuchtbereich 10, 30 vorliegend nur für jeweils einen der Scheinwerfer 11 der Kraftfahrzeuge 1, 3 in der Fig. dargestellt. Jeder der Scheinwerfer 11 wirft einen Lichtkegel auf eine Fläche 6, der im Wesentlichen durch den Leuchtbereich 10, 30 vorgegeben ist. Vorliegend ist die Fläche 6 eine Fahrbahn der Straße 8.

Die Scheinwerfer 11 weisen jeweils eine Matrixleuchtmittel, eine Anordnung von Mikrospiegeln, eine Anordnung von Flüssigkristallen oder einen Laserscanner auf. Insbesondere handelt es sich bei den Scheinwerfern 11 um LED-Scheinwerfer oder Laser-Scheinwerfer. Durch das gezielte Ansteuern von Leuchtpunkten des Scheinwerfers 11 ermöglicht dieser die Projektion eines Symbols 4 auf die Fläche 6.

Beispielsweise erkennt eine Erfassungseinrichtung 16, beispielsweise ein Radarsensor oder eine Kamera, einen Fußgänger 7, welche die Straße 8 überqueren will. Um den Fußgänger 7 über die Straße 8 zu bitten und dies für den Fußgänger 7 und weitere Verkehrsteilnehmer kenntlich zu machen, kann die Projektion eines entsprechenden Symbols 4 auf die Fläche 6, also auf die Fahrbahn, vorgesehen sein. Vorliegend ist das Symbol 4 ein Zebrastreifen. Beispielsweise wird durch das Kraftfahrzeug 3 an eine Steuerinstanz 2 übermittelt, dass der Fußgänger 7 die Straße 8 überqueren möchte. Beispielsweise umfasst das Kraftfahrzeug 3 hierzu eine Sendeeinheit 17.

Durch die Steuerinstanz 2, vorliegend eine Servereinrichtung 20, wird in einer nicht beanspruchten Ausführungsform eine Beleuchtungskarte 5 an die Kraftfahrzeuge 1, 3 übermittelt. Die Übermittlung erfolgt kabellos über ein Funksignal 22, insbesondere über WiFi, Bluetooth oder das Mobilfunknetz, beispielsweise über GSM, UMTS oder LTE. Hierzu greift die Servereinrichtung 20 vorliegend auf einen Sendemast 21 zu.

Durch die Beleuchtungskarte 5 wird die Projektion des Symbols 4, also des Zebrastreifens, auf die Fläche 6, also die Fahrbahn, vorgegeben. Beispielsweise wird durch die Beleuchtungskarte 5 eine Koordinate in einem, vorzugsweise bezüglich der Fläche 6, ortsfesten Koordinatensystem vorgegeben. Zusätzlich zu der Koordinate kann die Art, Ausrichtung und/oder Größe des Symbols 4 vorgegeben werden. Bei der Koordinate kann es sich um einen Schwerpunkt des Symbols 4 handeln. Eine Lokalisierungseinheit des Kraftfahrzeugs 1, 3 ermittelt eine Position für das jeweilige Kraftfahrzeug 1,3. Anhand der Position ist das Kraftfahrzeug in der Lage, sich in dem ortsfesten Koordinatensystem zu lokalisieren und/oder Koordinaten des ortsfesten Koordinatensystems in relative Koordinaten bezogen auf das jeweilige Kraftfahrzeug 1,3 umzurechnen.

Die Beleuchtungskarte 5 wird durch die Kraftfahrzeuge 1, 3 mittels einer jeweiligen Empfangseinheit 12, beispielsweise einer Antenne, empfangen. Anhand der Beleuchtungskarte 5 wird durch eine jeweilige Auswerteeinheit 13 eine jeweilige Abstrahlung für die Scheinwerfer 11 ermittelt. Beispielsweise wird durch die Auswerteeinheit 13 eines der Kraftfahrzeuge 1, 3 die Abstrahlcharakteristik für beide Scheinwerfer 11 des jeweiligen Kraftfahrzeugs 1, 3 anhand der Beleuchtungskarte 5 ermittelt. Beispielsweise wird die Abstrahlcharakteristik für die Scheinwerfer 11 so ermittelt, dass Bereiche 45 des Symbols 4, vorliegend Streifen des Zebrastreifens, mit einer Helligkeit ausgeleuchtet werden, die von der Helligkeit übrigen Bereiche des jeweiligen Leuchtbereich 10, 30 abweicht. Beispielsweise wird die Abstrahlcharakteristik für die Scheinwerfer 11 so ermittelt, dass die Bereiche 45 des Symbols 4 mit einer größeren oder kleineren Helligkeit ausgeleuchtet werden, als die übrigen Bereiche des jeweiligen Leuchtbereichs 10, 30.

Die ermittelte Helligkeitsverteilung für den Scheinwerfer 11 kann durch eine Stelleinheit 14 eingestellt werden. Beispielsweise steuert die Stelleinheit 14 einzelne Leuchtpunkte des Scheinwerfers 11 derart an, dass der Scheinwerfer 11 die ermittelte Helligkeitsverteilung abstrahlt. Insbesondere können die Leuchtpunkte des Scheinwerfers 11 hierzu einzeln eingeschaltet und/oder ausgeschaltet werden. Alternativ oder zusätzlich wird die Anordnung von Mikrospiegeln, der Laserscanner, die Anordnung von Flüssigkristallen oder das Matrixleuchtmittel derart angesteuert, dass der Scheinwerfer 11 die ermittelte Helligkeitsverteilung abstrahlt.

Durch die Beleuchtungskarte 5 erfolgt die Projektion des Symbols 4 auf die Fläche 6 durch die Scheinwerfer 11 der Kraftfahrzeuge 1 und 3 gemeinsam. Mit anderen Worten wird durch die Beleuchtungskarte 5 eine Abstrahlcharakteristik der Scheinwerfer 11 der Kraftfahrzeuge 1, 3 zum Projizieren des Symbols 4 synchronisiert.

Beispielsweise wird ein erster Teilbereich 40 des Symbols 4 nur durch den Scheinwerfer 11 des Kraftfahrzeugs 1 auf die Fläche 6 projiziert, da dieser innerhalb des Leuchtbereich Szenen des Kraftfahrzeugs 1 und außerhalb des Leuchtbereich 30 des Kraftfahrzeugs 3 liegt. Ein zweiter Teilbereich 41 des Symbols 4 wird sowohl durch die Scheinwerfer 11 des Kraftfahrzeugs 1 als auch die Scheinwerfer 11 des Kraftfahrzeugs 3 auf die Fläche 6 projiziert, da diese innerhalb der Leuchtbereiche 10, 30 bei der Kraftfahrzeuge 1, 3 liegt. Ein dritter Teilbereich 42 des Symbols 4 wird nur durch den Scheinwerfer 11 des Kraftfahrzeugs 3 auf die Fläche 6 projiziert, da dieser innerhalb des Leuchtbereich 30 des Kraftfahrzeugs 3 und außerhalb des Leuchtbereich 10 des Kraftfahrzeug 1 liegt.

Anhand der Beleuchtungskarte 5 wird die Projektion des Symbols 4 durch die Scheinwerfer 11 beider Kraftfahrzeuge 1, 3 derart synchronisiert, dass sich die drei Teilbereiche 40, 41, 42 sich zu dem vorgegebenen Symbol 4 zusammensetzen. Insbesondere wird die Projektion der Scheinwerfer 11 beider Kraftfahrzeuge 1, 3 im zweiten Teilbereichs 41 des Symbols 4 derart synchronisiert, dass die Bereiche 45, welche durch die jeweiligen Scheinwerfer 11 mit größerer oder kleinerer Helligkeit ausgeleuchtet werden, kongruent sind.

In dem hier beanspruchten Ausführungsbeispiel ist die Steuerinstanz 2 durch die beiden Kraftfahrzeuge 1, 3 gebildet. In diesem Fall kann die Beleuchtungskarte 5 durch die beiden Kraftfahrzeuge 1, 3 gemeinsam oder durch ein einzelnes der beiden Kraftfahrzeuge 1, 3 vorgegeben werden. Vorzugsweise kommunizieren die Kraftfahrzeuge 1, 3 in diesem Fall über die Sendeeinheit 17 und/oder die Empfangseinheit 12 direkt miteinander. Beispielsweise kommunizieren die Kraftfahrzeuge 1, 3 über WiFi, Bluetooth oder LTE-V.

Insgesamt zeigen die Beispiele, wie durch die Erfindung die Erkennbarkeit der Projektion des Symbols verbessert werden kann.

## Patentansprüche

1. Verfahren zum Betreiben einer Beleuchtungseinrichtung (15) für ein Kraftfahrzeug (1, 3), bei welchem ein Scheinwerfer (11) des Kraftfahrzeugs (1, 3) ein Symbol (4) auf eine Fläche (6) projiziert,
mit den Schritten:
- Empfangen einer vorgegebenen Beleuchtungskarte (5) aus einer Steuerinstanz (2) in einem bestimmungsgemäßen Normalbetrieb des Kraftfahrzeugs (1, 3), wobei durch die Beleuchtungskarte (5) die Projektion des Symbols (4) auf die Fläche (6) und eine Position in einem auf das Kraftfahrzeug (1, 3) bezogenen Koordinatensystem vorgegeben wird, und durch die Beleuchtungskarte (5) mehreren Punkten oder Koordinaten in dem auf das Kraftfahrzeug (1, 3) bezogenen Koordinatensystem ein Helligkeitswert zugeordnet wird,
- Ermitteln einer Abstrahlcharakteristik für den Scheinwerfer (11) derart, dass das Symbol (4) wie durch die Beleuchtungskarte (5) vorgegeben auf die Fläche (6) projiziert wird, wobei nur solche Bereiche des Symbols (4) durch den Scheinwerfer (11) auf die Fläche (6) projiziert werden, welche in einem vorgegebenen Leuchtbereich (10, 30) des Scheinwerfers (11) liegen und der vorgegebenen Leuchtbereich (10, 30) so gewählt wird, dass eine Blendung anderer Verkehrsteilnehmer reduziert wird, und
- Einstellen der ermittelten Abstrahlcharakteristik für den Scheinwerfer (11), wobei
das Kraftfahrzeug (1, 3) Teil eines Verbundes mehrerer Kraftfahrzeuge (1, 3) ist und die Beleuchtungskarte (5) aus dem Verbund mehrerer Kraftfahrzeuge (1, 3) als Steuerinstanz (2) empfangen wird und mittels der Beleuchtungskarte (5) eine weitere Abstrahlcharakteristik eines Scheinwerfers (11) eines weiteren Kraftfahrzeugs (1, 3) der mehreren Kraftfahrzeuge (1, 3) mit der ermittelten Abstrahlcharakteristik synchronisiert wird, wobei
das Kraftfahrzeug (1, 3) mit einem oder mehreren Kraftfahrzeugen (1, 3) aus dem Verbund der mehreren Kraftfahrzeuge (1, 3) Daten zum Erstellen der Beleuchtungskarte (5) austauscht.

2. Verfahren nach Anspruch 1,
**dadurch gekennzeichnet, dass**
das Symbol (4) auf einen Untergrund, auf dem das Kraftfahrzeug (1, 3) steht, insbesondere eine Fahrbahn, als die Fläche (6) projiziert wird.

3. Verfahren nach einem der vorhergehenden Ansprüche,
**dadurch gekennzeichnet, dass**
der Scheinwerfer (11) ein Matrixleuchtmittel, eine Anordnung von Mikrospiegeln, eine Anordnung von Flüssigkristallen oder ein Laserscanner umfasst, welches/welche/welcher zum Einstellen der Abstrahlcharakteristik des Scheinwerfers (11) entsprechend angesteuert wird.

4. Verfahren nach einem der vorhergehenden Ansprüche,
**dadurch gekennzeichnet, dass**
beim Einstellen der Abstrahlcharakteristik für den Scheinwerfer (11) einzelne Leuchtpunkte des Scheinwerfers (11) so eingeschaltet oder ausgeschaltet werden und/oder eine Abstrahlrichtung der einzelnen Leuchtpunkte des Scheinwerfers (11) so vorgegeben wird, dass die Abstrahlcharakteristik des Scheinwerfers (11) der ermittelten Abstrahlcharakteristik für den Scheinwerfer (11) entspricht.

5. Kraftfahrzeug (1, 3) mit einer Beleuchtungseinrichtung (15) mit einem Scheinwerfer (11), welcher dazu ausgebildet ist, ein Symbol (4) auf eine Fläche (6) zu projizieren, aufweisend
- eine Empfangseinheit (12) die zum Empfangen einer vorgegebenen Beleuchtungskarte (5) aus einer Steuerinstanz (2) in einem bestimmungsgemäßen Normalbetrieb des Kraftfahrzeugs (1,3) ausgebildet ist, wobei durch die Beleuchtungskarte (5) die Projektion des Symbols (4) auf die Fläche und eine Position in einem auf das Kraftfahrzeug (1, 3) bezogenen Koordinatensystem vorgegeben ist, und mehreren Punkten oder Koordinaten der Beleuchtungskarte (5) in dem auf das Kraftfahrzeug (1, 3) bezogenen Koordinatensystem ein Helligkeitswert zugeordnet wird,
- eine Auswerteeinheit (13), die zum Ermitteln einer Abstrahlcharakteristik für den Scheinwerfer (11) derart ausgebildet ist, dass die Projektion des Symbols (4) auf die Fläche (6) wie durch die Beleuchtungskarte (5) vorgegeben erfolgt, und wobei die Auswerteeinheit (13) ausgebildet ist, nur solche Bereiche des Symbols (4) durch den Scheinwerfer (11) auf die Fläche (6) zu ermitteln, welche in einem vorgegebenen Leuchtbereich (10, 30) des Scheinwerfers (11) liegen und der vorgegebene Leuchtbereich (10, 30) so gewählt wird, dass eine Blendung anderer Verkehrsteilnehmer reduziert wird,
- eine Stelleinheit (14), die zum Einstellen der ermittelten Abstrahlcharakteristik für den Scheinwerfer (11) ausgebildet ist, wobei
- das Kraftfahrzeug (1, 3) dazu ausgebildet ist, als Teil eines Verbundes mehrerer Kraftfahrzeuge (1, 3) die Beleuchtungskarte (5) aus dem Verbund mehrerer Kraftfahrzeuge (1, 3) als Steuerinstanz (2) zu empfangen, wobei mittels der Beleuchtungskarte (5) eine weitere Abstrahlcharakteristik eines Scheinwerfers (11) eines weiteren Kraftfahrzeugs (1, 3) der mehreren Kraftfahrzeuge (1, 3) mit der ermittelten Abstrahlcharakteristik synchronisiert wird, und
- das Kraftfahrzeug (1, 3) dazu ausgebildet ist, mit einem oder mehreren Kraftfahrzeugen (1, 3) aus dem Verbund der mehreren Kraftfahrzeuge (1, 3) Daten zum Erstellen der Beleuchtungskarte (5) auszutauschen.

6. Kraftfahrzeug (1, 3) nach Anspruch 5,
**dadurch gekennzeichnet, dass**
der Scheinwerfer (11) ein Matrixleuchtmittel, eine Anordnung von Mikrospiegeln, eine Anordnung von Flüssigkristallen oder einen Laserscanner aufweist.

## Claims

1. Method for operating a lighting device (15) for a motor vehicle (1, 3), in which a headlamp (11) of the motor vehicle (1, 3) projects a symbol (4) onto a surface (6), having the steps:
- receiving a predetermined illumination map (5) from a control body (2) in a normal operation of the motor vehicle (1, 3) as intended, wherein by means of the illumination map (5) the projection of the symbol (4) onto the surface (6) and a position in a coordinate system relating to the motor vehicle (1, 3) are predetermined, and by means of the illumination map (5) a brightness value is assigned to several points or coordinates in the coordinate system relating to the motor vehicle (1, 3),
- determining a radiating characteristic for the headlamp (11) such that the symbol (4) is projected onto the surface (6) as predetermined by means of the illumination map (5), wherein only those regions of the symbol (4) are projected by the headlamp (11) onto the surface (6) which lie in a predetermined illumination region (10, 30) of the headlamp (11) and the predetermined illumination region (10, 30) is selected such that a dazzling of other road users is reduced, and
- setting the determined radiating characteristic for the headlamp (11), wherein
the motor vehicle (1, 3) is one of a grouping of several motor vehicles (1, 3) and the illumination map (5) is received by the grouping of several motor vehicles (1, 3) as a control body (2) and by means of the illumination map (5) a further radiating characteristic of a headlamp (11) of a further motor vehicle (1, 3) of the several motor vehicles (1, 3) is synchronised with the determined radiating characteristic, wherein
the motor vehicle (1, 3) exchanges data for creating the illumination map (5) with one or several motor vehicles (1, 3) from the grouping of the several motor vehicles (1, 3).

2. Method according to claim 1,
**characterised in that**
the symbol (4) is projected onto an underground on which the motor vehicle (1, 3) is standing, particularly a road, as the surface (6).

3. Method according to any of the preceding claims,
**characterised in that**
the headlamp (11) comprises a matrix illuminant, an arrangement of micro-mirrors, an arrangement of liquid crystals or a laser scanner which are appropriately controlled for setting the radiating characteristic of the headlamp (11).

4. Method according to any of the preceding claims,
**characterised in that**
when setting the radiating characteristic for the headlamp (11), individual illumination points of the headlamp (11) are switched on or switched off such, and/or a radiating direction of the individual illumination points of the headlamp (11) is predetermined such, that the radiating characteristic of the headlamp (11) corresponds to the determined radiating characteristic for the headlamp (11).

5. Motor vehicle (1, 3) having a lighting device (15) with a headlamp (11) which is configured to project a symbol (4) onto a surface (6), having
- a receiving unit (12) which is configured to receive a predetermined illumination map (5) from a control body (2) in a normal operation of the motor vehicle (1, 3) as intended, wherein by means of the illumination map (5) the projection of the symbol (4) onto the surface and a position in a coordinate system relating to the motor vehicle (1, 3) are predetermined, and a brightness value is assigned to several points or coordinates of the illumination map (5) in the coordinate system relating to the motor vehicle (1, 3),
- an evaluation unit (13) which is configured to determine a radiating characteristic for the headlamp (11) such that the projection of the symbol (4) onto the surface (6) is carried out as predetermined by the illumination map (5), and wherein the evaluation unit (13) is configured to determine only those regions of the symbol (4) by means of the headlamp (11) onto the surface (6) which lie in a predetermined illumination region (10, 30) of the headlamp (11) and the predetermined illumination region (10, 30) is selected such that a dazzling of other road users is reduced,
- an actuating unit (14) which is designed to set the determined radiating characteristic for the headlamp (11), wherein
- the motor vehicle (1, 3) is configured, as one of a grouping of several motor vehicles (1, 3), to receive from the grouping of several motor vehicles (1, 3) as control body (2) the illumination map (5), wherein by means of the illumination map (5) a further radiating characteristic of a headlamp (11) of a further motor vehicle (1, 3) of the several motor vehicles (1, 3) is synchronised with the determined radiating characteristic, and
- the motor vehicle (1, 3) is configured to exchange with one or several motor vehicles (1, 3) from the grouping of the several motor vehicles data for creating the illumination map (5).

6. Motor vehicle (1, 3) according to claim 5,
**characterised in that**
the headlamp (11) has a matrix illuminant, an arrangement of micro-mirrors, an arrangement of liquid crystals or a laser scanner.

## Revendications

1. Procédé de fonctionnement d'un dispositif d'éclairage (15) pour un véhicule automobile (1, 3), dans lequel un phare (11) du véhicule automobile (1, 3) projette un symbole (4) sur une surface (6),
avec les étapes consistant à :
- recevoir une carte d'éclairage (5) prédéterminée à partir d'une instance de commande (2) dans un fonctionnement normal conforme du véhicule automobile (1, 3), dans lequel la projection du symbole (4) sur la surface (6) et une position dans un système de coordonnées se rapportant au véhicule automobile (1, 3) sont prédéterminées par la carte d'éclairage (5), et une valeur de luminosité est associée à plusieurs points ou coordonnées dans le système de coordonnées se rapportant au véhicule automobile (1, 3) par la carte d'éclairage (5),
- déterminer une caractéristique de rayonnement pour le phare (11) de sorte que le symbole (4) est projeté sur la surface (6) prédéterminée par la carte d'éclairage (5), dans lequel seules les zones du symbole (4) se trouvant dans une zone d'éclairage (10, 30) prédéterminée du phare (11) sont projetées par le phare (11) sur la surface (6) et la zone d'éclairage (10, 30) prédéterminée est sélectionnée de sorte qu'un éblouissement d'autres usagers de la route est réduit, et
- régler la caractéristique de rayonnement déterminée pour le phare (11), dans lequel le véhicule automobile (1, 3) fait partie d'un ensemble de plusieurs véhicules automobiles (1, 3) et la carte d'éclairage (5) est reçue de l'ensemble de plusieurs véhicules automobiles (1, 3) en tant qu'instance de commande (2) et, au moyen de la carte d'éclairage (5), une autre caractéristique de rayonnement d'un phare (11) d'un autre véhicule automobile (1, 3) des plusieurs véhicules automobiles (1, 3) est synchronisée avec la caractéristique de rayonnement déterminée, dans lequel
le véhicule automobile (1, 3) échange des données avec un ou plusieurs véhicules automobiles (1, 3) de l'ensemble des plusieurs véhicules automobiles (1, 3) pour créer la carte d'éclairage (5).

2. Procédé selon la revendication 1,
**caractérisé en ce**
**que** le symbole (4) est projeté sur un support sur lequel le véhicule automobile (1, 3) est stationné, en particulier une chaussée, en tant que la surface (6).

3. Procédé selon l'une quelconque des revendications précédentes,
**caractérisé en ce**
**que** le phare (11) comprend un moyen d'éclairage matriciel, un agencement de micromiroirs, un agencement de cristaux liquides ou un scanner laser, lesquels sont commandés en conséquence pour régler la caractéristique de rayonnement du phare (11).

4. Procédé selon l'une quelconque des revendications précédentes,
**caractérisé en ce**
**que** lors du réglage de la caractéristique de rayonnement pour le phare (11), des points lumineux individuels du phare (11) sont allumés ou éteints et/ou une direction de rayonnement des points lumineux individuels du phare (11) est prédéterminée de sorte que la caractéristique de rayonnement du phare (11) correspond à la caractéristique de rayonnement déterminée pour le phare (11).

5. Véhicule automobile (1, 3) avec un dispositif d'éclairage (15) avec un phare (11), lequel est conçu pour projeter un symbole (4) sur une surface (6), présentant
- une unité de réception (12) qui est conçue pour recevoir une carte d'éclairage (5) prédéterminée à partir d'une instance de commande (2) dans un fonctionnement normal conforme du véhicule automobile (1, 3), dans lequel la projection du symbole (4) sur la surface et une position dans un système de coordonnées se rapportant au véhicule automobile (1, 3) sont prédéterminées par la carte d'éclairage (5), et une valeur de luminosité est associée à plusieurs points ou coordonnées de la carte d'éclairage (5) dans le système de coordonnées se rapportant au véhicule automobile (1, 3),
- une unité d'évaluation (13), qui est conçue pour déterminer une caractéristique de rayonnement pour le phare (11) de sorte que la projection du symbole (4) sur la surface (6) s'effectue comme prédéterminé par la carte d'éclairage (5), et dans lequel l'unité d'évaluation (13) est conçue pour ne déterminer que les zones du symbole (4) par le phare (11) sur la surface (6) qui se trouvent dans une zone d'éclairage (10, 30) prédéterminée du phare (11) et la zone d'éclairage (10, 30) prédéterminée est sélectionnée de manière à réduire un éblouissement d'autres usagers de la route,
- une unité de réglage (14) qui est conçue pour régler la caractéristique de rayonnement déterminée pour le phare (11), dans lequel
- le véhicule automobile (1, 3) est conçu, en tant que partie d'un ensemble de plusieurs véhicules automobiles (1, 3), pour recevoir la carte d'éclairage (5) de l'ensemble de plusieurs véhicules automobiles (1, 3) en tant qu'instance de commande (2), dans lequel, au moyen de la carte d'éclairage (5), une autre caractéristique de rayonnement d'un phare (11) d'un autre véhicule automobile (1, 3) des plusieurs véhicules automobiles (1, 3) est synchronisée avec la caractéristique de rayonnement déterminée, et
- le véhicule automobile (1, 3) est conçu pour échanger des données avec un ou plusieurs véhicules automobiles (1, 3) de l'ensemble des plusieurs véhicules automobiles (1, 3) pour créer la carte d'éclairage (5).

6. Véhicule automobile (1, 3) selon la revendication 5,
**caractérisé en ce**
**que** le phare (11) présente un moyen d'éclairage matriciel, un agencement de micromiroirs, un agencement de cristaux liquides ou un scanner laser.
